# EUROPEAN PATENT APPLICATION

(11) **EP 1 672 581 A1**
(43) Date of publication of application: **21.06.2006**
(21) Application number: 05025779.9
(22) Date of filing: 25.11.2005
(51) Int. Cl.: G06Q 30/00

(54) **Service data organization**

(30) Priority: 20.12.2004 US 18289
(71) Applicant: Hewlett-Packard Development Company, L.P., Houston, TX 77070 (US)
(72) Inventor: Lamb, James A., Elkhorn, NE 68022 (US); Giebler, Joseph G., Omaha, NE 68136 (US); Edlund, Jeffrey F., Lees Summit, MO 64063 (US); Cameron, Jeffrey M., Omaha, NE 68137 (US); Iosbaker, Gary Dean, St. Petersburg, FL 33701 (US); Gerbeling, Richard A., Omaha, NE 68144 (US)
(74) Representative: Schoppe, Fritz

(57) **Abstract**

Embodiments are provided for maintaining service related data. One computing device embodiment includes a processor, memory in communication with the processor, and computer executable instructions. The computer executable instructions can execute to provide a virtual service data organization interface (232) that can be used to update service data located in a number of data trees (334, 338). The virtual service data organization interface can include a virtual data tree having a number of entries (350, 351, 352, 353, 356, 359, 361) to associate a number of service data stores to each other that are located in a number of locations in the number of data trees (334, 338). Each particular service data store of the number of service data stores to be associated with each of each other can be mapped to a particular entry.

## Description

### Introduction

Communications systems, such as systems used in telecommunications networks, include a number of system components. These system components work together to relay information from one wired or wireless communications device, such as a telephone, laptop or desktop computing device, or personal digital assistant (PDA), to another. In providing this connectivity, the communications system can provide a number of services to an individual using the communications device (a user). In a telecommunications context, for example, a communications system can include user services such as, call waiting, call forwarding, Push-to-Talk functionality, conference calling, and the like.

In addition to the services provided to the user, communications systems also have a number of internal system based services associated with the connection between communication devices. For example, systems can maintain a variety of user information, such as communications device identification information, billing information, etc.

Communications systems can also keep track of where the user is with respect to one of a number of base station components that are part of the system. If a user has roamed out of the system, many communications systems can determine where the user has roamed and, if possible, how to get information to the user while they are roaming.

Some communications systems can also monitor access, by communications device users, to the system. Communications systems can also manage the billing of communications usage to the users of the system, among other services associated with the connection of communications devices.

In the communications industry, service applications are often being added to a communications system to allow the communications system to provide additional services to the communications device users accessing the system and to the system supporting the communications between the devices. Service applications can be added for a variety of reasons. For example, service applications can be developed periodically over the lifespan of the system.

Additionally, in the communications industry, new base technology can emerge and with it, the hardware and/or software of a communications system will likely have to evolve or be replaced. In attempts to extend the usefulness of hardware used in a present system, communications system operators and designers may use hardware and/or software to bridge the gap between the present system and a future system. In such cases, as the gap is bridged, service applications, available for the future system, can become accessible on the present system.

When service applications are added to a communications system, the applications are typically not organized with respect to each other and may not even be located on the same system component. For example, the service application and its associated data can be on different computing devices and/or on different components from other service applications and/or service application related data.

Some service applications utilize data that could be accessible from the service related data of other service applications. However, many such service applications keep their service related data in a separate application specific directory that is used to store data for use with that particular service application. In this manner, there may be duplicate copies of the same data disbursed around the communications system. Since various combinations of service applications can be provided on communications systems, service applications are typically not designed to use data of and/or to share data with other service applications.

In such instances, a user, or the communications system, may want to update service application data. However, in instances where duplicate data sets may exist, the data may be updated in one location, but not in another. In such instances, different, inconsistent, and/or incorrect results can be produced by the service applications using duplicate data sets where some of the data has been updated and some data has not.

### Brief Description of the Drawings

Figure 1 illustrates an example of a communications system.
Figure 2 illustrates an example of a number of system components including a virtual profiler.
Figure 3A is a table representing an example of information within a virtual profiler.
Figure 3B illustrates an example of a service data tree within a home location register component.
Figure 3C illustrates an example of a service data tree within an authorization, authentication, and accounting component.

### Detailed Description

Embodiments of the present invention provide devices, systems, and methods for organizing service data. The organization can be in the form of a virtual data structure, such as a virtual data tree and/or table that associates a number of locations (e.g., service data stores) of service related data. The virtual data structure allows for the updating of data in various locations on a system based upon a link from the virtual data structure to the data to be updated. In this way, data in one location on the system (e.g., a data store in memory) can be associated with other data in other locations (e.g., in other data stores in memory) based upon their links to a particular entry in the virtual data structure.

Generally, the data stored in memory on a device can be referred to as being in a data store within a component of the communications system. Data stores can reside in a telecommunications network, the PSTN, and/or the Internet, among other systems. Service data stores can be used by service applications on their system, or in some embodiments, by service applications on one or more different systems.

In some embodiments, the virtual data structure can include a virtual service data organization interface. For example, a computing device can include a processor, memory in communication with the processor, and computer executable instructions stored in memory and executable on the processor. The computer executable instructions can execute to provide a virtual service data organization interface. The virtual service data organization interface can update service data located in a number of data trees.

This updating functionality can be accomplished, for example, by using a virtual service data organization interface that includes a virtual data tree that associates service data stores to each other. Generally, association of the service data stores means that the service data stores or particular data therein are linked or grouped together in order to update or otherwise manage them. The service data stores can be associated, for example, based upon a number of access paths that are each mapped to an entry in the virtual data tree. In such embodiments, the number of access paths provides access to a number of service data stores that are to be associated with each other, such as when the service data stores are located in a number of data trees.

In some embodiments, the virtual data tree can be used as an access point for administering changes to one or more service data stores that may be disbursed around the communications system. In such embodiments, a user that is administering the changes does not have to know where the data store is located and because they can access an entry in the virtual data tree that is mapped to the data store they want to change. In such embodiments, entries can be mapped to one or more data items within one or more data stores.

Embodiments of the present invention also include computing system embodiments. In such embodiments, the computing system can include a number of first computing devices each having a data tree therein and a second computing device that can update service data located in the data trees of the number of first computing devices.

The updating of the service data can be provided, for example, through use of a virtual data tree of associated service data stores. For example, the service data stores can be associated based upon a number of access paths that are each mapped to an entry in the virtual data tree. The number of access paths provide access to the number of service data stores to be associated with each other. These data stores can be located in the data trees of the first computing devices.

The embodiments of the present invention also include method embodiments. For example, in some embodiments, a method of maintaining service related data is provided. Such embodiments can include mapping a number of access paths to a number of service data stores to be associated with each other, such as where the service data stores are located in a number of data trees.

Computing systems can include various numbers and types of components and can contain multiple components of one type. For example, the number of first computing devices can include a number of home location registers (HLRs) each having a service data store. In such embodiments, changes to be made to the service data store of the first HLR can be made through a virtual service data organization interface and corresponding changes can be made to the service data store of the second HLR. In this way, the data that has been changed has harmonized, i.e., made the data the same, the service data stores of the first and second HLRs with respect to that particular data.

Method embodiments can also include building a virtual data tree of associated service data stores based upon the number of mapped access paths. A virtual service data organization interface can, for example, be provided to update service data located in the number of data trees through use of the virtual data tree. Access can also be provided by a user to the virtual services data organization interface.

In various embodiments, the mapping of a number of access paths can include developing a listing of a particular virtual data tree entry and a service data store file location for each service data store associated with the virtual data tree entry. The mapping of a number of access paths can also include developing a list having multiple virtual data tree entries and a service data store file location for each service data store associated with each of the multiple virtual data tree entries.

In some embodiments, methods can include updating service data located in a number of data trees of a number of first computing devices via a virtual service data organization interface. This can be accomplished by having a virtual data tree of associated service data stores that are associated based upon a number of access paths that are each mapped to an entry in the virtual data tree. In embodiments where service data stores are located in the data trees of the computing devices, the number of access paths can provide access to the number of service data stores on the various computing devices in order to associate the service data stores with each other.

### A Communications System

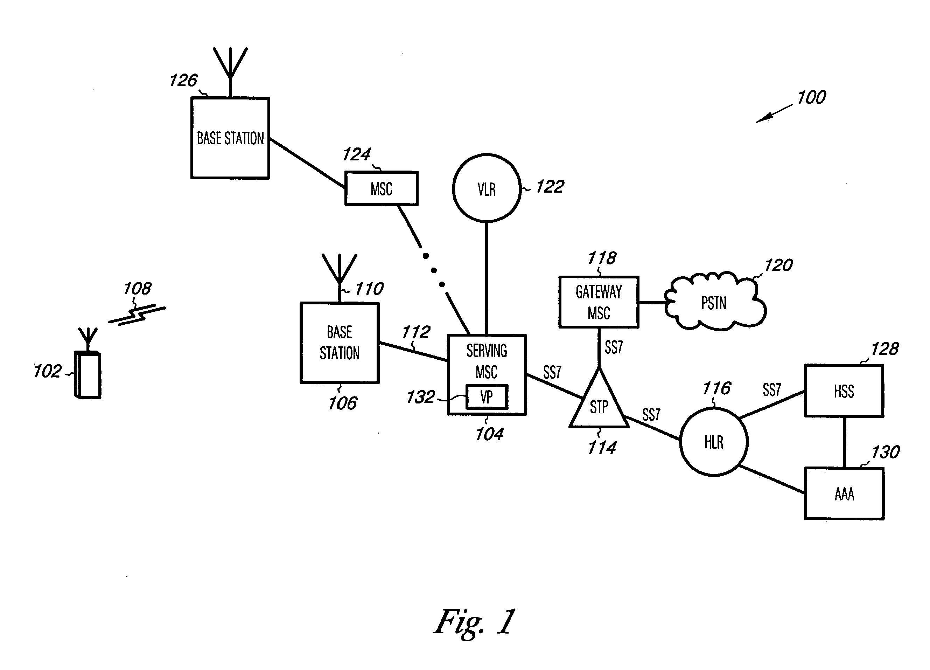

Figure 1 illustrates an example of a communications system 100 for use in the telecommunications industry. Figure 1 illustrates a mobile device 102 communicating with a mobile switching center (MSC) 104. Figure 1 provides an example of the types of components used in a communications system and discusses the various services provided between components in order to facilitate the connection of a call and provides some example of services provided to users of such a communications system. The embodiment of Figure 1 is provided for reference as to a telecommunications network environment which can benefit from embodiments of the present invention. However, the embodiments of the invention relate to various types of communications systems and, accordingly, are not limited to telecommunications systems.

In Figure 1, the MSC 104 includes a virtual profiler (VP) 132 which can provide an organization structure for managing the service data on a system. Although shown in MSC 104, the VP 132 can be provided in various other components within the system 100 or other components of a telecommunications system. For example, the virtual profiler can be located on a HLR 116, an HSS 128, an MSC 118, etc. Additionally, the virtual profiler can be located on a data server. The data server can have a variety of data provided thereon, including service data.

In various wireless telecommunications systems, the MSC is connected to a plurality of base stations, e.g., 106, 126, etc., that are dispersed throughout the geographic area serviced by the system. Each MSC is responsible for, among other things, establishing and maintaining calls between mobile devices and between a mobile device and a wireline terminal, which is connected to the system via the local and/or long-distance networks.

An MSC performs various functions, including mobility management, call handoffs, call admission, call control, resource allocation, and so forth. The call is then relayed from the MSC to base stations and via wireless communications to the mobile device.

A call can be received from various sources, such as from another device within the network or a device from another network, such as from the Public Switched Telephone Network (PSTN) 120, or from the Internet, for example. When a call is received by the network, it is provided to an MSC for routing. This MSC is sometimes referred to as the gateway MSC (GMSC). The MSC that is used to route the call and make the connection between the two devices is often referred to as the serving MSC (SMSC). In some cases, the GMSC can also act as the SMSC.

Additionally, whenever the mobile device 102 roams into a new MSC coverage area (i.e., the "cell" for which the MSC is responsible) the new MSC becomes the SMSC. The mobile device transmits its stored identity to the new SMSC via a base station 106. The subscriber identity information is transmitted over a radio channel 108 in a format compliant with an air interface (e.g., an American National Standards Institute (ANSI)/IS-41 compliant interface) and detected by an antenna 110 of base station 106. Base station 106, in turn, transmits the user identity information to the SMSC 104, such as for example, via communication line 112.

Signal transfer point (STP) 114 is a node in a telephone network that routes messages between exchanges, and between exchanges and databases that hold user and routing information. A HLR is one such database in a cellular system that contains the user information within the provider's home service area. The data in the HLR is requested and transferred to a VLR in the new area.

Other components of the system can include voice switches, such as service switching points (SSPs), that query service control point (SCP) databases using packet switches. Examples of databases include STPs, billing components, security components, data servers, and the like. In the embodiment of Figure 1, the gateway MSC 118 can serve as a network switch for connecting to a public switched telephone network (PSTN) 120.

When a subscriber moves from one area to another within the system, in some cases, another MSC may be used as the SMSC. In such cases, the HLR 116 is notified of the network address, associated with the MSC 104 currently serving the mobile device 102, and also can request requisite user information for providing service to the roaming mobile device 102. The HLR I 16 updates its database to store the network address representing the serving MSC 104 and also copies the requested user information to the VLR 122 associated with the SMSC 104. The network address representing the SMSC 104 stored in the HLR 116 is later utilized by the mobile network to reroute incoming calls intended for the mobile device 102 to the SMSC 104.

Accordingly, whenever a telecommunications device user dials a telephone number for the mobile device 102, the HLR 116 is queried by the mobile network to determine the current location of the mobile device 102. Utilizing the stored network address in the HLR 116 representing the SMSC 104, the HLR 116 requests a roaming number from the SMSC 104 in response to the receipt of the query signal.

The roaming number provided by the SMSC 104 is then used by the telecommunications network to route the incoming signal toward the SMSC 104. The SMSC 104 then pages the mobile device 102 and accordingly establishes a voice connection with the mobile device 102, if available. If the mobile device 102 roams out of SMSC 104 coverage area and into another MSC 124 coverage area, MSC 104 will hand-off the communication to MSC 124 and base station 126.

The communications system 100 shown in Figure 1 also includes a home subscriber server component (HSS) 128 and an authorization, authentication, and accounting (AAA) component 130. The HSS 128 manages information about the mobile user, similar to a HLR, but expands its management services to include additional information such as location information which can be used to develop location-based services.

As its name implies, the AAA 130 is used to monitor access to the communication system by checking a user's authorization, authenticating the user's identification, and initiating the billing of the user for the connection. In some systems, the HLR, the HSS, and/or the AAA can be combined and can be provided on the same computing device. Additionally, some systems have separate billing servers for handling some or all of the accounting functions of the AAA.

As one will appreciate from reading the present disclosure, the above described communications system components (e.g., MSCs, HLRs, and/or VLRs, AAAs, among others) are functionalities that reside on computing devices. These functionalities are provided by computer executable instructions to perform the tasks of each particular function. The MSCs, HLRs, VLRs, and the like, are often placed on separate computing device components of a communications system.

Service applications and service related data can be loaded and stored on these various components of the communications system at various times during the life of the communications system. The service applications and service related data can be loaded onto existing components of the system and/or can be provided on a component that is being added to the system, for example. As such, the service applications and service related data can be in data stores on a number of different computing device components of the communications system.

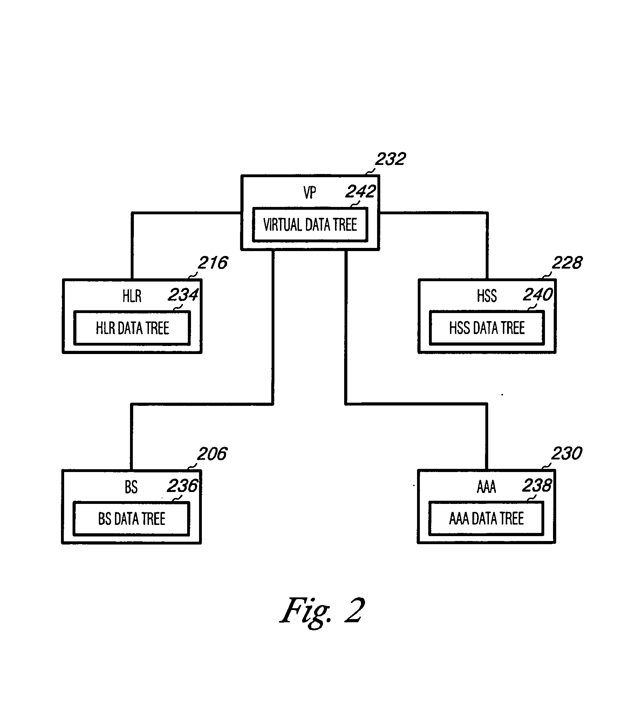

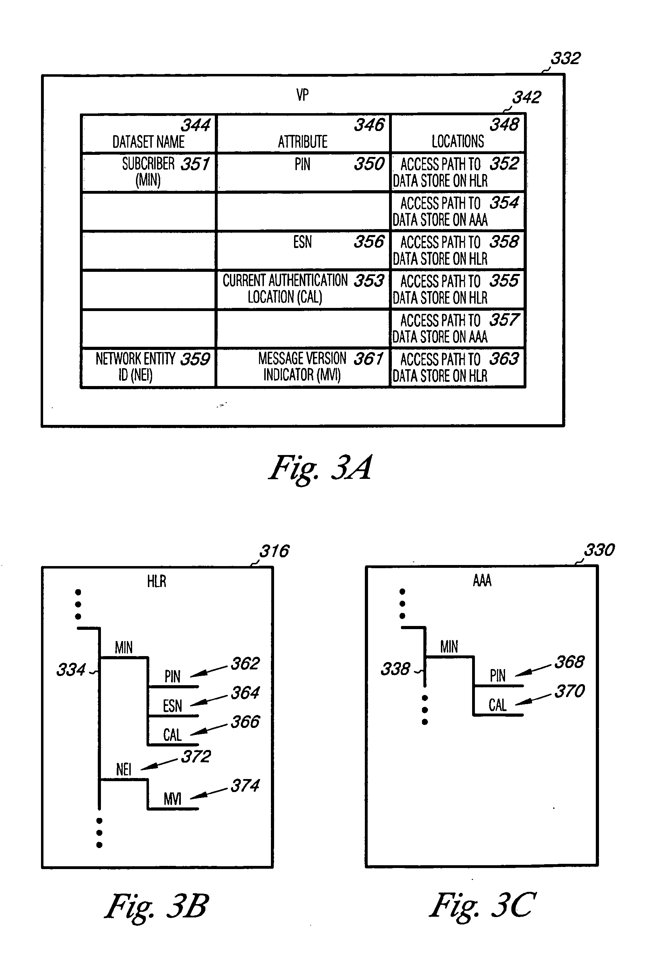

The figures herein follow a numbering convention in which the first digit or digits correspond to the drawing figure number and the remaining digits identify an element in the drawing. Similar elements between different figures may be identified by the use of similar digits. For example, 116 may reference element "116" in Figure 1, and a similar element may be referenced as 216 in Figure 2, 316 in Figure 3, etc.

### A Virtual Profiler For Data Organization

Figure 2 illustrates an example of a number of system components including a virtual profiler (VP). The virtual profiler can reside in one or the various components in Figure 1. In the example in Figure 2, the communications system includes a base station 206, a HLR 216, a HSS 228, and an AAA 230. Each of the above components includes a data store having services data therein and may include other types of data. In addition to the base station 206, HLR 216, HSS 228, and AAA 230, other components of a telecommunications system, e.g., system 100, can include service data stores. Further, the base station 206, HLR 216, HSS 228, AAA 230, and virtual profiler 232, shown in Figure 2 can be the same components as the base station 106, HLR 116, HSS 128, AAA 130, and virtual profiler 132 in Figure 1, respectively.

In this embodiment, each of the components (i.e., HLR, base station, HSS, and AAA) has a data tree provided therein (i.e., 234, 236, 240, and 238, respectively). Each data tree can include a service data store and, in some embodiments, other types of data. As will be discussed in more detail with respect to Figures 3B and 3C, the various data stores within data trees (i.e., 234, 236, 240, and 238) can have data that is duplicated in a data store on another component.

A VP 232 includes computer executable instructions that can execute to keep track of the various service applications and service related data on the communications system, to associate duplicate data such that when information is updated in one data store, the data in the other data stores can also be updated, etc. Illustrations will be described in more detail below with respect to Figures 3A - 3C. The duplicate data in the various data stores can be updated automatically through use of computer executable instructions, or can be initiated by a system administrator, for example. For instance, updates can be made through use of computer executable instructions that provide access by an administrator to a virtual services data organization interface and to allow an administrator to make updates to the service data stores on the system.

The virtual services data organization interface can also include computer executable instructions to allow the administrator to select updates to be made to the variety of service data stores on the system. In this way, if some duplicate data is not to be harmonized, the administrator can make such a determination and, therefore, select via the interface, not to update the data.

In some embodiments, the VP 232 can include a centralized copy of service related data for use by the various service applications on the communications system. This centralized data can be provided in the virtual data tree 242 shown in Figure 2. The centralized data can be a duplicate of the data available on the other components of the system.

The centralized copy, in such embodiments, can be accessed by an administrator and the changes made can be communicated to the other duplicate data sets on the other components of the system. In this way, the changes to the service data for the system are made to a centralized data set and then made on the associated data stores on the other components.

Generally, an administrator is an individual having access to change the functionality of the system through access at one of the components of the communications system. For example, an administrator can access a communications system component (e.g., HLR, VLR, data server, HSS, etc.) to make changes, such as to user information. Computer executable instructions of the VP 232 can be used to identify the changes made to the user information. For example, the VP 232 can include computer executable instructions that can check the data stores associated with entries on a virtual data tree to see if any changes have been made in any of the data stores. If a change has been made to a particular data store, computer executable instructions can identify the other data stores associated with the particular entry in the virtual data tree that is linked to the changed data store. The data in the other associated data stores can then be updated with the changed information. In this way, the data in the data stores that are associated with each other through their link to a particular entry in the virtual data tree can be harmonized such that each data store has the updated information.

In some embodiments, computer executable instructions can be used to provide access, by a service application, to the virtual data tree. For example, access by the service application to the virtual data tree can be provided by the virtual service data organization interface. In this way, the centralized copy of the data can be accessed instead of the data on the other components of the device.

Embodiments, such as that shown in Figures 3A - 3C, use a virtual data tree that links service data stores on various components of a communications system. As discussed below, these data stores are mapped to one or more entries within the virtual data tree (e.g., virtual data tree 242).

Generally, mapping provides a link between an entry in the virtual data tree and a service data store. Data stores can be mapped in various manners. For example, file names and/or file paths can be used to identify the location of a data store and/or data within a data store. In this way, a duplicate copy of the data is not provided on the virtual profiler, but rather, changes are made in a data store on a component of the system and the other duplicate data stores are updated based upon the mapping provided in the virtual profiler.

In such embodiments, computer executable instructions can be used to compare the duplicate data to identify which data has been changed and which data is to be updated. For example, the data can be compared by reviewing the modification dates, the data, and/or the data stores; by comparing the data within the duplicate data stores; etc.

### Mapping of Data Using A Virtual Profiler

Figure 3A is a table 342 representing an example of information within a virtual profiler. The information can be provided in various forms. For instance, the information can be organized using a list, table, matrix, data tree, or other organizational structure that can have the information organized therein. The table 342 is provided within the VP 332. In various embodiments, the VP 332 can be the same as the VP 132/232.

The table 342 can be in the form of a data tree, such as is indicated in Figure 2 at 242, or part of a data tree. In the example in Figure 3A, the table 342 is used to map an entry in the table, such as dataset name entries 344, with the locations of duplicate service data (e.g., PIN data 362 and PIN data 368 in Figures 3B and 3C) to be associated with each other, for purposes of updating the data in a uniform manner, for example.

In Figure 3A, the table 342 includes dataset name entries 344, attributes 346, and locations 348. In the table 342, a dataset name entry called "MIN" is provided which, in this example, stands for mobile identification number (MIN). Another dataset called a network entity ID (NEI) 359 is also located in the table 342.

A MIN is often used as the wireless carrier's identifier for a wireless device, such as a phone or PDA, within the communications system. In the telecommunications industry, the MIN can include various identifiers used by the communications system. For example, in the table 342, the MIN includes a number of attributes including a personal identification number (PIN) 350, an electronic serial number (ESN) 356, and a current authentication location (CAL) 353.

Attributes provide data to the various functions of the communications system. For example, a PIN is often used as an identifier in conjunction with a subscriber identity module (SIM) card to complete a call. An ESN is often used as an identification number embedded in a wireless device by a manufacturer. Each time a call is placed, the ESN is transmitted to the base station, e.g., 106/126 in Figure 1, so the wireless carrier's MSC can check the call's authentication and authorization. A CAL is often used to identify the location of authentication data used to authenticate a user of a communications device that is accessing the communications system.

As in Figure 3A, access to various data stores can be provided in table 342 which allows an administrator of the communications system, or other such individual, to access data located in various locations across the communications system from the virtual tree. In this way, the administrator does not have to know the location of the data that is to be changed, but rather, can access the virtual tree (e.g., table 342) to make the changes or locate the data store. The data structure shown in Figure 3A includes access paths 352, 354, 358, 355, 357, and 363 to identify data stores within a HLR, e.g., HLR 116, and an AAA, e.g., AAA 130, of a communications system such as system 100 of Figure 1. Specifically, access paths 352, 358, 355, and 363 are used to identify data stores in an HLR while access paths 354 and 357 are used to identify data stores in an AAA.

In Figure 3A, the virtual profiler includes the location information in the column with the header "location" 348 for the data stores in the HLR and AAA. For example, data regarding the attribute PIN 350 can be found in data stores in the HLR and AAA of the communications system through the use of access paths 352 and 354, respectively.

An access path to each of the locations of the PIN data, e.g., 352 and 354, can be provided to data store on a HLR and access path to data store on an AAA. In this way, an administrator can use the virtual tree to identify and/or access one or more data stores to make changes, among other functions.

Computer executable instructions can be used to monitor, automatically, update, etc., one or more of the data stores that are linked to an entry in the table (e.g., the data stores that are linked to the entry PIN 350 through access paths 352 and 354). An administrator can make selections of one or more data stores linked to a data entry in the table to be updated.

In various embodiments, when a change is made to data within a data store, an event notification can be sent to other data stores in other system components to indicate to, for example, an administrator that changed information is available. In such embodiments, the administrator can then review the notification and decide whether to make the change to the data store on their system component. Embodiments can also include computer executable instructions to allow an administrator of a system component to "opt in" or "opt out" of receiving event notifications and/or automatic updates.

In Figure 3A, with respect to the entry PIN, the access paths 352 and 354 provide access to data stores having data regarding the PIN. Alternatively speaking, the access paths 352 and 354 provide a link or a map to the data stores having the PIN information. The mapping of the access paths 352 and 354 to the corresponding data stores provides an association between these data stores based upon their link to the same entry 350. In this way, the data stores can be said to be associated with each other.

The entry CAL 353 in table 342 also associates to data stores by their access paths 355 and 357. In this way, data to be changed with respect to the CAL can be accomplished for each of the data stores having CAL data through use of the table 342.

The virtual profiler 332 can also be used to track and make changes to data for entries that have one data store linked thereto. For example, since the ESN is located on one component (i.e., the HLR 316), the location on the HLR 316 is shown at 358. In this instance, since the ESN information is in one location on the system, it is associated with itself until another subentry is made under the entry ESN 356. Similarly, the NEI 359 includes an entry for a message version indicator (MVI) 361. The data for use with the MVI is linked to the MVI entry 361 through access path 363 to the data store on the HLR.

Figures 3B and 3C illustrate the locations of the information in Figure 3A on the HLR 316 and AAA 330. In various embodiments, HLR 316 and AAA . 330 can be the same as HLR 116/216 and AAA 130/230, respectively. The access paths provided in the table 342 of Figure 3A point to the data stores shown in Figures 3B and 3C. For example, the access path to data store (having PIN information) on the HLR linked by access path 352 of Figure 3A points to the location on the HLR 316 in Figure 3B at PIN 362.

Similarly, with respect to the link between the elements of the data tree of the HLR 316 in Figure 3B and the table 342 of Figure 3A, access path 358, through the ESN 356, points to location 364, access path 355, through the CAL 353, points to location 366, and access path 363, through the MVI 361, points to location 374. Likewise, with respect to the link between the elements of the data tree of the AAA 330 in Figure 3C and the table 342 of Figure 3A, access path 354, through the PIN 350, points to location 368 and access path 357, through the CAL 353, points to location 370.

The association of the various data stores can be accomplished in many ways. For example, the mapped access paths can be determined based upon a commonality in the subject matter of a first service data item in a first location and a second service data item in a second location. For instance, computer executable instructions can review data within the various data stores and duplicate data can be grouped under the same entry in the virtual data tree, such as the PIN data in Figure 3A. The first location can be located in a first data tree and a second location in a second data tree and the first and second data trees can be located on different computing devices.

Computing devices include an operating system layer and an application layer. The operating system layer has software programs that include a set of Application Program Interfaces (APIs). The language and/or message format of the APIs allow an operating system to interpret executable instructions received from program applications (e.g., service applications) in the application layer and return results to the program application.

The service data updating functionality can be provided by a number of application program interfaces (APIs). For example, an API can be designed to have computer executable instructions that execute to selectively update the service data stores. Selectively updating the service data stores can be provided periodically, and/or provided to particular data stores (e.g., through selection by an administrator), or other forms of selection. The number of APIs can include one or more APIs located on a HLR, a HSS, an AAA server, and/or a base station, for example. In such embodiments, the APIs can be executed on the device in which they reside or on another device within the communications system or connect thereto.

In various embodiments, the APIs can use a virtual service data organization interface to accomplish the updating. In such embodiments, the virtual service data organization interface can include the virtual data tree. Selectively updating the service data stores can include various functionalities. A function can include adding data within at least one service data store, deleting data within at least one service data store, or modifying data within at least one service data store, for example.

Updating the service related data can also include harmonizing the service data in all of the service data stores associated with a particular virtual data tree entry. For example, with respect to the embodiment described with respect to Figure 3A, the service related data stores holding the PIN information are associated with the MIN entry in the table 342. The information in these associated data stores can be harmonized through the use of computer executable instructions.

The harmonized service data for all of the service data stores associated with the particular virtual data tree entry can be written to memory. This copy can then be used as a backup copy and/or as a centralized copy as discussed above. Writing a copy of the harmonized service data for all of the service data stores associated with the particular virtual data tree entry to memory can include writing the copy to memory within a computing device having the virtual service data organization interface, for example.

In various embodiments, a device can include computer executable instructions for mapping a number of access paths to a number of service data stores to be associated with each other and which are located in a number of data trees, building a virtual data tree of associated service data stores based upon the number of mapped access paths, and providing a virtual service data organization interface that can be used to update service data located in the number of data trees through use of the virtual data tree. In this way, the virtual service data organization interface can be used by an administrator to update data stores mapped in the virtual data tree.

Building the virtual data tree can include identifying each of the number of service data stores associated to each virtual data tree entry. The function of building the virtual data tree can be accomplished manually and/or with the issue of computer executable instructions, for example. Building the virtual data tree can also include compiling a list having multiple virtual data tree entries and a service data store file location for each service data store associated with each of the multiple virtual data tree entries based upon the identified association of each of the number of data stores.

The service data stores can be associated in various manners. For example, the association can be based upon a number of access paths that are each mapped to an entry in the virtual data tree. An access path can, for example, be mapped from a particular entry in the virtual data tree to at least one of the service data stores. Embodiments of the present invention can include computer executable instructions for monitoring the service data stores to identify if a change has been made to data within at least one of the service data stores. In this way, data can be kept updated regardless of which associated data store has been changed. Such monitoring can be accomplished through use of computer executable instructions.

In such embodiments, all service data stores that are also associated with the virtual data tree entry that is associated with the service data store that has had data changed can be updated. The service data stores can also be monitored to identify if all of the service data stores associated with a particular virtual data tree entry are harmonized. Computer executable instructions can be used for identifying what data should be changed to harmonize the associated service data stores. The identified data can then be changed to harmonize the associated service data stores.

Although specific embodiments have been illustrated and described herein, those of ordinary skill in the art will appreciate that any arrangement calculated to achieve the same techniques can be substituted for the specific embodiments shown. This disclosure is intended to cover adaptations or variations of various embodiments of the invention. It is to be understood that the above description has been made in an illustrative fashion, and not a restrictive one.

Combination of the above embodiments, and other embodiments not specifically described herein will be apparent to those of skill in the art upon reviewing the above description. The scope of the various embodiments of the invention includes any other applications in which the above structures and methods are used. Therefore, the scope of various embodiments of the invention should be determined with reference to the appended claims, along with the full range of equivalents to which such claims are entitled.

In the foregoing Detailed Description, various features are grouped together in a single embodiment for the purpose of streamlining the disclosure. This method of disclosure is not to be interpreted as reflecting an intention that the embodiments of the invention require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A computing device, comprising:
a processor;
a memory in communication with the processor; and
computer executable instructions stored in the memory and executable on the processor to:
provide a virtual service data organization interface (232) used to update service data located in a number of data trees (334, 338), wherein the virtual service data organization interface (232) includes
a virtual data tree (242) having a number of entries (350, 351, 352, 353, 356, 359, 361) to associate a number of service data stores to each other that are located in a number of locations in the number of data trees (334, 338); and
wherein each particular service data store of the number of service data stores to be associated with each other is mapped to a particular entry.

2. The computing device of claim 1, wherein the computer executable instructions also include instructions to provide access by a user to the virtual service data organization interface (232).

3. The computing device of claim 1, wherein the number of data trees (334, 338) are located on at least one different computing device.

4. The computing device of claim 3, wherein the computing device is part of a network (100) and wherein the at least one different computing device is part of a different network.

5. The computing device of claim 1, wherein the computer executable instructions execute to make a change, made to particular service data, to all locations of service data associated with the particular service data.

6. The computing device of claim 5, wherein the change made to all locations of service data associated with the particular service data is made via the virtual service data organization interface (232).

7. The computing device of claim 1, wherein each particular service data store of the number of service data stores to be associated with each other is mapped to a particular entry based upon a commonality in the subject matter of a first service data item in a data store located in a first location and a second service data item in a data store located in a second location.

8. The computing device of claim 7, wherein the first location is in a first data tree and a second location is in a second data tree.

9. The computing device of claim 1, wherein each particular service data store of the number of service data stores to be associated with each other is mapped to a particular entry through an access path between each particular entry and each service data store to be mapped to the particular entry.
